# EUROPÄISCHE PATENTSCHRIFT

(11) **EP 4 337 870 B1**
(45) Veröffentlichungstag und Bekanntmachung des Hinweises auf die Patenterteilung: **09.07.2025**
(21) Anmeldenummer: 22728362.9
(22) Anmeldetag: 05.05.2022
(51) Int. Cl.: F16B 39/38

(54) **SICHERUNGSMUTTER MIT FEDERSPEICHER-FORMKRAGEN**
LOCKNUT HAVING A SPRING-ACCUMULATOR SHAPED-COLLAR
CONTRE-ÉCROU À COLLET EN FORME D'ACCUMULATEUR À RESSORT

(30) Priorität: 11.05.2021 DE 102021112290
(43) Veröffentlichungstag der Anmeldung: 20.03.2024
(73) Patentinhaber: SF Handels- und Besitzgesellschaft mbH, 78554 Aldingen (DE)
(72) Erfinder: FLAIG, Hartmut, 78554 Aldingen (DE)
(74) Vertreter: Patent- und Rechtsanwälte Behrmann Wagner PartG mbB
(86) Internationale Anmeldenummer: PCT/EP2022/062204
(87) Internationale Veröffentlichungsnummer: WO 2022/238239

(56) Entgegenhaltungen:
- DE-C- 731 639
- JP-A- S60 132 116
- US-A- 2 260 531

## Beschreibung

Die vorliegende Erfindung betrifft eine Sicherungsmutter nach dem Oberbegriff des Anspruchs 1.

Aus dem Stand der Technik sind bereits verschiedene Sicherungsmuttern mit einem einstückig an einem Mutterkörper angeformten Formkragen oder Sicherungskragen bekannt, die zur Selbstsicherung oder Selbsthemmung führen, in dem beim Einschrauben eines Schraubbolzens eine Verspannung zwischen dem Mutterkörper einerseits und dem Formkragen oder Sicherungskragen andererseits erzeugt oder ausgebildet wird.

Dazu wird in einem axial von einer Innengewindebohrung des Mutterkörpers durch einen Schlitz oder eine Ausnehmung beabstandeten Formkragen, insbesondere auf der Innenstirnfläche des Formkragens, ein Sicherungs-Gewinde eingeformt oder ausgebildet, welches mit einem gewissen Versatz zum Innengewinde der Innengewindebohrung des Mutterkörpers versehen ist. Während des Einschraubens der Schraube in das Sicherungs-Gewinde und das Innengewinde wird durch den Versatz der Gewinde zueinander und die axiale Verformbarkeit Formkragens eine Verspannungswirkung oder ein Bremsmoment aufseiten der Schraube oder des Bolzens erzeugt und damit eine Sicherung der Schraube oder des Schraubbolzens ermöglicht.

Derartige Ansätze sind beispielsweise aus der WO 2007/076968 A1 und der WO 2010/034324 A1 der Anmelderin bekannt.

Die US 2,376,927 A betrifft eine Sicherungsmutter mit einem einstückig angeformten Formkragen, wobei der Formkragen insgesamt jedoch breiter oder mit einem größeren Durchmesser ausgeführt ist, als der restliche Mutterkörper. Die vorgeschlagene Kunstruktion ist nur wenig stabil.

Die US 2,551,102 A betrifft eine Sicherungsmutter mit einem Mutterkörper und einem daran einstückig angeformten Formkragen, wobei über den Umfang gleichmäßig verteilt Durchbrüche in dem Formkragen dadurch gebildet werden, dass in axialer Richtung Durchbrüche in den Formkragen eingebracht, insbesondere eingestanzt werden.

Auch die US 2,320,785 A betrifft eine Sicherungsmutter die einen an den Mutterkörper angrenzenden und einstückig mit dem Mutterkörper ausgebildeten Formkragen vorsieht. Der Formkragen wird in bekannter Weise aus einem Ringkragen hergestellt.

Weitere Sicherungmuttern sind zum Beispiel aus der JPS60-132 116 A sowie der DE 10 2011 052 266 A1 bekannt.

Aus der DE 731 639 C sowie aus der US 2,260,531 A sind Sicherungsmuttern gemäß dem Oberbegriff des Anspruchs 1 bekannt.

Für viele Anwendungsbereiche derartiger Sicherungsmuttern ist es jedoch besonders wünschenswert, dass das jeweils erzeugte Bremsmoment auf die Schraube oder den Schraubbolzen identisch oder in einem engen Toleranzbereich erzeugt oder definiert wird. In diesem Zusammenhang ist jedoch die jeweilige Fertigungstoleranz der Schraubbolzen sowie der Sicherungsmuttern eine nicht vorhersehbare oder nicht planbare Einflussgröße, was wiederum einer genauen Definition oder einer genauen Vorherbestimmung des jeweils erzeugten Bremsmoments entgegensteht oder entgegenwirkt.

Es ist daher die Aufgabe der vorliegenden Erfindung eine Sicherungsmutter vorzuschlagen, bei der das jeweils erzeugte Bremsmoment auf eine Schraube oder einen Schraubbolzen besser vorbestimmbar ist und insbesondere weniger von fertigungstechnischen Toleranzen aufseiten des Schraubbolzens und/oder aufseiten der Sicherungsmutter abhängt.

Gelöst wird diese Aufgabe mit den Merkmalen des unabhängigen Anspruchs 1. Vorteilhafte Ausführungsformen sind Gegenstand der Unteransprüche sowie der nachfolgenden Anspruchsstütze und Figurenbeschreibung.

Die Sicherungsmutter sieht dabei einen an einer Stirnfläche eines Mutterkörpers angeordneten, einstückig mit dem Mutterkörper verbundenen Formkragen vor, mit einer konzentrisch zu einer Innengewindebohrung des Mutterkörpers verlaufenden Innenstirnfläche, welche in axialer Richtung eine Beabstandung von der Innengewindebohrung aufweist und ein Sicherungsgewinde aufweist, welches zu einem Innengewinde der Innengewindebohrung versetzt, insbesondere winkelmäßig versetzt, ist. Weiter ist dabei vorgesehen, dass in axialer Richtung angrenzend an die Stirnfläche des Mutterkörpers auf einer radialen Außenseite des Formkragens durch den Formkragen ein Hinterschneidungsabschnitt ausgebildet wird.

Mit anderen Worten ausgedrückt wird zwischen der Stirnfläche des Mutterkörpers und dem Formkragen in einem Übergangsbereich oder in einem an die Stirnfläche angrenzenden Abschnitt des Formkragens auf der radial äußeren Seite des Formkragens ein Hinterschneidungsabschnitt ausgebildet. Dies führt dazu, dass bei einer Realisierung des Formkragens mit einer stärker ausgebildeten Elastizität oder Federwirkung auf eine axiale Zugspannung, wie beim Einschrauben eines Schraubbolzens, die Wirkung eines Federspeichers durch den Formkragen besser realisiert werden kann, sodass beim Einschrauben des Schraubbolzens das Bremsmoment sich unabhängig von etwaigen Fertigungstoleranzen der Sicherungsmutter und des Schraubbolzens einem Endwert oder Grenzwert annähert, sodass ein Großteil des insgesamt erzeugten Bremsmomentes bereits zu Beginn des Einschraubens des Schraubbolzens in dem Formkragen erzeugt wird und ein weiteres Einschrauben das Bremsmoment nicht oder nur noch unwesentlich steigert.

Dabei wird ausgenutzt, dass gerade ein Hinterschnitt auf der radial äußeren Seite im Bereich des Formkragens, der der Stirnfläche des Mutterkörpers am nächsten kommt, in besonders vorteilhafter Weise die besagte und gewünschte Funktionalität eines Federspeichers des Formkragens bewirkt oder begünstigt.

Erfindungsgemäß ist vorgesehen, dass der Formkragen auf einer radialen Außenseite, bevorzugt angrenzend an eine Außenoberfläche, welche bevorzugt parallel zur Stirnfläche des Mutterkörpers verläuft und den vom Mutterkörper abgewandten Abschluss des Formkragens bildet, einen Krümmungsabschnitt ausbildet, der eine kreisrunde oder elliptische Kontur aufweist. Es hat sich herausgestellt, dass der Krümmungsabschnitt gerade in Verbindung mit dem Hinterschneidungsabschnitt eine besonders vorteilhafte, wünschenswerte Federcharakteristik des Formkragens ermöglicht. In einer vorteilhaften Ausführungsform kann zudem vorgesehen sein, dass in axialer Richtung der Krümmungsabschnitt unmittelbar oder nahtlos in den Hinterschneidungsabschnitt übergeht. Besonders bevorzugt kann dabei vorgesehen sein, dass die Krümmung beim Übergang vom Krümmungsabschnitt in den Hinterschneidungsabschnitt im Wesentlichen konstant beibehalten wird.

Erfindungsgemäß ist weiter vorgesehen, dass in Umfangsrichtung der Hinterschneidungsabschnitt und/oder Krümmungsabschnitt abschnittsweise oder unterbrochen ausgebildet ist. Sofern ein Hinterschneidungsabschnitt und ein Krümmungsabschnitt vorgesehen ist, kann bevorzugt vorgesehen sein, dass in Umfangsrichtung die Hinterschneidungsabschnitte und Krümmungsabschnitte in gleichen oder übereinstimmenden Bereichen, insbesondere Winkelbereichen ausgebildet sind. Durch die abschnittsweise Ausbildung des Hinterschneidungsabschnitts und/oder Krümmungsabschnitts kann in vorteilhafter Weise die Federeigenschaft des Formkragens gezielt angepasst und beeinflusst werden, um je nach Anwendungsgebiet die benötigten oder gewünschten Bremsmomente zu erzeugen und gleichzeitig die Vorhersehbarkeit oder die Obergrenze der Bremsmomente zu gewährleisten oder einzustellen.

Gemäß einer ebenfalls vorteilhaften Ausgestaltung der Sicherungsmutter kann vorgesehen sein, dass der Formkragen auf einer radialen Außenseite, bevorzugt angrenzend an eine Außenoberfläche und/oder einen Krümmungsabschnitt, einen Stufenabschnitt ausbildet, der bevorzugt in axialer Richtung auf die Außenoberfläche zu immer stärker in axialer Richtung verläuft. Der Stufenabschnitt kann bevorzugt zusammen mit dem Hinterschneidungsabschnitt und dem Krümmungsabschnitt vorgesehen sein. Der Stufenabschnitt ermöglicht in vorteilhafter Weise eine ausreichende Materialstärke des Formkragens auf einer radialen Innenseite oder Innenstirnfläche zur Ausbildung des Sicherungsgewindes. Gleichzeitig ermöglicht der Stufenabschnitt eine Ausbildung des sonstigen Formkragens, besonders der radialen Außenseite des Formkragens mit einer Form, die die elastischen Eigenschaften und damit die Sicherungswirkung weiter verbessert, in dem die Bremsmomente beim Einschrauben einer Schraube oder eines Schraubbolzens im Wesentlichen begrenzt sind und damit auch bei Fertigungstoleranzen gut reproduziert werden können. Durch die Realisierung des Stufenabschnitts kann zudem in besonders vorteilhafter Weise realisiert werden, dass der Formkragen im Bereich des Krümmungsabschnitts und/oder im Bereich des Hinterschneidungsabschnitts mit einer annähernd konstanten Materialstärke ausgeführt wird. Auch diese Ausführung des Formkragens verbessert zusätzlich die gewünschte Wirkung des Formkragens als Federspeicher.

Außerdem kann in einer bevorzugten Ausführungsform vorgesehen sein, dass in Umfangsrichtung Abschnitte mit Hinterschneidungsabschnitt und/oder Krümmungsabschnitt mit Abschnitten des Formkragens mit reduzierter Wandstärke abwechselnd angeordnet sind. Die in Umfangsrichtung abschnittsweise reduzierte Wandstärke kann abermals oder für sich die Verformungs- und Verspannungseigenschaften des Formkragens beeinflussen und damit zur Einstellung der gewünschten Bremsmomente genutzt werden. Bei einer abwechselnden Anordnung von Abschnitten mit verringerter Wandstärke und Abschnitten mit Hinterschneidungsabschnitt und/oder Krümmungsabschnitt kann sowohl eine bevorzugte Symmetrie und damit symmetrische Wirkung des Formkragens bereitgestellt werden. Gleichzeitig kann auch die notwendige Stabilität des Formkragens gesichert werden, da die Abschnitte oder Bereiche mit verringerter Wandstärke auch die Stabilität des Formkragens an sich und auch die Stabilität der Verbindung zwischen dem Formkragen und dem Mutterkörper beeinflussen, insbesondere verringern.

In einer weiteren besonders vorteilhaften Ausgestaltung können in Umfangsrichtung auch in Bereichen mit Verringerter Wandstärke Hinterscheidungsabschnitte oder Resthinterschnitte ausgebildet sein. Dies kann gerade dann besonders vorteilhaft sein, wenn die Wandstärke nur geringfügig reduziert wird. In diesem Fall ist der Hinterschneidungsabschnitt oder zumindest der Resthinterschnitt in Umfangsrichtung durchgängig oder ununterbrochen.

Gemäß einer weiteren, besonders vorteilhaften Ausgestaltung der Sicherungsmutter kann vorgesehen sein, dass die Abschnitte des Formkragens mit reduzierter Wandstärke Schlitze, insbesondere radiale Durchbrüche im Formkragen bildende Schlitze, im Formkragen umschließen, die mit einer Längsrichtung oder Längserstreckung der Schlitze parallel zur Stirnfläche des Mutterkörpers verlaufen. Die entsprechenden Schlitze entstehen beispielsweise zentral innerhalb der Abschnitte des Formkragens mit reduzierter Wandstärke, wenn in gewissen Bereichen oder Abschnitten in radialer Richtung die Wandstärke des Formkragens auf null reduziert wird. Wenn die Wandstärke des Formkragens in Umfangsrichtung unterschiedlich stark reduziert wird, entstehen dann in gewissen Bereichen die besagten Schlitze, die dann in angrenzenden Bereichen, in denen die Wandstärke weniger stark reduziert wurde, von den besagten Bereichen mit reduzierter Wandstärke umgeben werden. Die Ausbildung der Schlitze innerhalb und/oder umschlossen von Abschnitten des Formkragens mit reduzierter Wandstärke, trägt, wie auch die Abschnitte der reduzierten Wandstärke, zur Veränderung und Einstellung der Federeigenschaften des Formkragens und damit zur Einstellung oder Vorbestimmung der Bremsmomente des Sicherungsgewindes bei.

In einer weiteren, besonders vorteilhaften Ausführungsform der Sicherungsmutter kann vorgesehen sein, dass die Abschnitte des Formkragens mit reduzierter Wandstärke auf der radialen Außenseite des Formkragens eben und in axialer Richtung verlaufen. Diese Ausgestaltung hat unterschiedliche Vorteile. Zunächst führt die auf der radialen Außenseite des Formkragens eben ausgebildete Abflachung des Formkragens zur Ausbildung der Bereiche verringerter Wandstärke gerade dazu, dass in Umfangsrichtung keine konstante sondern eine variierende Verringerung der Wandstärke erzeugt wird. Dies wiederum bietet einen guten Ausgleich zwischen den Bedürfnissen zur Anpassung der Federeigenschaften des Formkragens einerseits und der Notwendigkeit zur Stabilisierung oder Beibehaltung der Stabilität des Formkragens andererseits. Weiter führt die ebene oder gradlinige Abflachung des Formkragens auf der radialen Außenseite dazu, dass bei einer Annäherung am dem Mittelpunkt der Sicherungsmutter, nämlich dem Mittelpunkt der Gewinde, die besagten Schlitze ausgebildet werden können, die wiederum von den Bereichen mit reduzierten Wandstärke umgeben oder umschlossen sind.

Eine weitere, besonders wünschenswerte Ausgestaltung der Sicherungsmutter sieht vor, dass Abschnitte des Formkragens mit reduzierter Wandstärke über den Umfang gleichverteilt sind. Dies beduetet, dass sich die Abschnitte des Formkragens mit reduzierter Wandstärke über einen gleichen Winkelbereich erstrecken, der ein entsprechender Bruchteil von 360° ist.

Bei einer Aufteilung in eine grade Anzahl an Abschnitte des Formkragens mit reduzierter Wandstärke entstehen dabei vorteilhaft gegenüberliegende Abschnitte auf der radialen Außenseite des Formkragens, die paarweise parallel zueinander ausgebildet sind. Dies erlaubt eine einfache und effiziente Herstellung oder Ausbildung der Bereiche des Formkragens mit reduzierter Wandstärke.

Durch die Wahl der Anzahl und die Wahl der Reduzierung der Wandstärke in den besagten Abschnitten kann das Bremsmoment auf einen Bolzen oder eine Schraube eingestellt werden.

Weiterhin kann vorteilhaft vorgesehen sein, dass der Formkragen durch eine Umformung eines Ringkragens, bevorzugt durch Kaltumformung oder Kaltfließpressen, ausgebildet ist.

Alternativ kann vorteilhaft vorgesehen sein, dass der Formkragen durch eine spanende Bearbeitung ausgebildet ist.

Auch Mischformen der vorgenannten Ausführungsform sind denkbar. Beispielsweise kann vorgesehen sein, dass eine Kaltverformung oder ein Kaltfließpressen im Wesentlichen die radial innere Form oder Geometrie des Formkragens ausbildet oder verantwortet, wohingegen die radial äußere Form oder die radiale Außenseite des Formkragens, insbesondere im Hinterschneidungsabschnitt, Krümmungsabschnitt und/oder Stufenabschnitt als Ergebnis einer spanenden Bearbeitung ausgebildet ist.

Weiterhin vorteilhaft kann vorgesehen sein, dass der Formkragen, zumindest angrenzend an die Innenstirnfläche, eine über den gesamten Umfang ebene, insbesondere vertiefungsfreie, Außen- und/oder Innenoberfläche aufweist. Dies ermöglicht in vorteilhafter Weise genügend Fläche oder Oberfläche zur Ausbildung des Sicherungsgewindes.

Nachfolgend wird die Erfindung anhand von rein schematischen, beispielhaften, Ausführungsbeispielen zeigenden Darstellungen erläutert.

Darin zeigt:
- Fig. 1:: eine Simulation einer nicht von der Erfindung umfassten Sicherungsmutter in einem Stadium vor dem Erzeugen des Gewindes und des Sicherungsgewindes;
- Fig. 2:: einen Schnitt durch eine gattungsgemäße Sicherungsmutter;
- Fig. 3:: eine Seitenansicht einer erfindungsgemäßen Sicherungsmutter in einer ersten Ausführungsform;
- Fig. 4:: eine perspektivische Darstellung einer erfindungsgemäßen Sicherungsmutter gemäß der ersten Ausführungsform;
- Fig. 5a:: eine schematische Schnittzeichnung durch eine erfindungsgemäße Sicherungsmutter in einer zweiten Ausführungsform;
- Fig. 5b:: eine schematische Seitenansicht auf eine erfindungsgemäße Sicherungsmutter in einer zweiten Ausführungsform;
- Fig. 5c:: eine teilweise geschnittene schematische Perspektivansicht auf eine erfindungsgemäße Sicherungsmutter in einer zweiten Ausführungsform;
- Fig. 6a:: eine schematische Schnittzeichnung durch eine gattungsgemäße Sicherungsmutter in einer zweiten Ausführungsform;
- Fig. 6b:: eine schematische Seitenansicht auf eine gattungsgemäße Sicherungsmutter in einer zweiten Ausführungsform;
- Fig. 6c:: eine teilweise geschnittene schematische Perspektivansicht auf eine gattungsgemäße Sicherungsmutter in einer zweiten Ausführungsform.

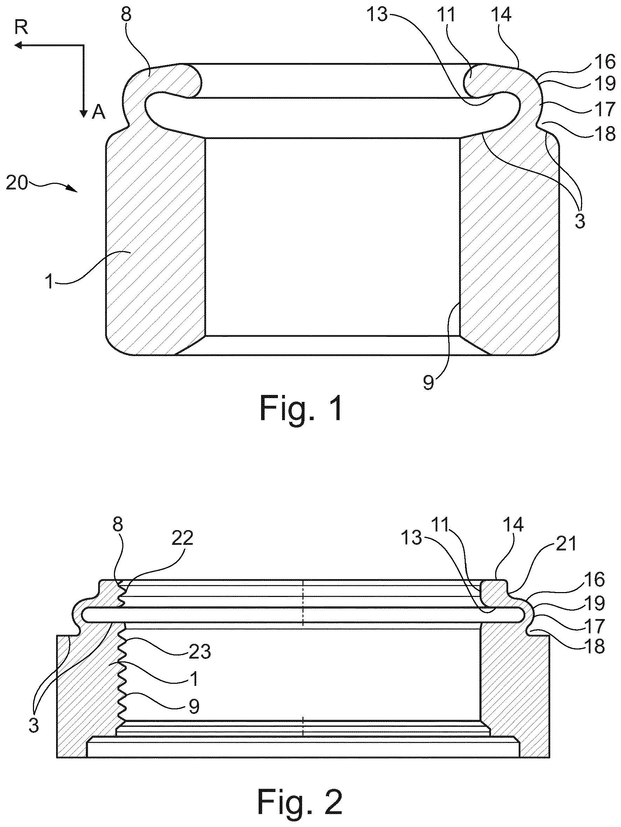

Die Fig. 1 zeigt eine Simulation einer Sicherungsmutter 20 in einer Schnittdarstellung. Wie in der Fig. 1 zu erkennen ist, ist an dem Mutterkörper 1 ein Formkragen 8 einstückig angeformt. Der Formkragen 8 bildet auf einer radialen Außenseite 16 einen Hinterschneidungsabschnitt 17 aus, der dazu führt, dass in einem Übergang zwischen der Stirnfläche 3 des Mutterkörpers 1 und dem Formkragen 8 in axialer Richtung A ein Hinterschnitt 18 ausgebildet wird. Dieser Hinterschnitt 18 oder der dazugehörige Hinterschneidungsabschnitt 17 des Formkragens 8 verbessern deutlich die Eigenschaften, insbesondere die Federwirkung, des Formkragens 8.

Der Hinterschneidungsabschnitt 17 kann entweder dadurch erreicht werden, dass bei einem achswertigen Umformen eines Ringkragens zur Ausbildung des Formkragens 8 eine Ausstülpung oder Auswölbung in radialer Richtung R zu einem gewissen Grad toleriert oder sogar provoziert wird. Alternativ kann der Hinterschneidungsabschnitt 17 auch durch eine spanende Bearbeitung des Formkragens 8 hergestellt werden. Auch wenn die Simulation der Fig. 1 eine gewisse Unebenheit in der Innenoberfläche 13 oder der Außenoberfläche 14 des Formkragens 8 vermuten lässt, sind diese im tatsächlichen Bauteil nicht vorhanden. Stattdessen wird gemäß einer vorteilhaften Ausführungsform erreicht, dass die Innenoberfläche 13 oder die Außenoberfläche 14 ebene, vertiefungsfreie Flächen sind, die dadurch eine vorteilhafte Aufnahme oder Ausbildung eines Sicherungsgewindes auf der Innenstirnfläche 11 ermöglichen. Die Innenstirnfläche 11 des Formkragens 8 sowie die Innengewindebohrung 9 des Mutterkörpers 1 sind in der beispielhaften Darstellung oder Simulationsdarstellung der Fig. 1 noch ohne entsprechende Gewinde dargestellt. Durch ein Einbringen der jeweiligen Gewinde mit einem Versatz oder Winkelversatz zueinander wird die grundsätzliche Sicherungsfunktion der Sicherungsmutter 20 erreicht. Denn beim Einschrauben eines Schraubbolzens oder einer sonstigen Schraube mit Außengewinde in das Sicherungsgewinde des Formkragens 8 und das Innengewinde des Mutterkörpers 1 wird eine Verspannung zwischen Sicherungsmutter 20 und Schraubbolzen erreicht, die ein Bremsmoment auf dem Schraubbolzen erzeugt und damit eine Selbsthemmung oder Selbstsicherung des Schraubbolzens ermöglicht.

Durch die Ausbildung des Hinterschneidungsabschnitts 17 wird dabei erreicht, dass die Bremsmomente auf den Schraubbolzen weniger oder kaum noch abhängig von fertigungsbedingten Abweichungen oder Toleranzen aufseiten der Sicherungsmutter oder des Schraubbolzens abhängig sind. Stattdessen wird durch den Hinterschneidungsabschnitt 17 ermöglicht, dass beim Einschrauben des Schraubbolzens das Bremsmoment relativ schnell auf einen gewollten Wert oder Soll-Wert ansteigt und beim weiteren Einschrauben nicht oder nur unwesentlich weiter ansteigt. Die Bremsmomente können durch verschiedene Maßnahmen definiert oder eingestellt werden, wie sie nachfolgend noch mit Bezug zu den weiteren Ausführungsformen beschrieben werden.

Der Formkragen 8 gemäß Fig. 1 zeigt auch angrenzend an den Hinterschneidungsabschnitt 17 auf der radialen Außenseite einen Krümmungsabschnitt 19, der eine kreisrunde oder elliptische Form oder Kontur aufweist. Auch diese Form auf der radialen Außenseite 16 des Formkragens 8 verbessert die Eigenschaften, insbesondere die Federeigenschaften, des Formkragens 8 und verbessert somit die reproduzierbare Sicherungswirkung der Sicherungsmutter 20.

Die Fig. 2 zeigt einen Schnitt durch eine vorteilhafte Ausgestaltung einer gattungsgemäßen Sicherungsmutter 20. Diese weist neben einem Hinterschneidungsabschnitt 17 und einem Krümmungsabschnitt 19 einen Stufenabschnitt 21 auf, der bevorzugt zwischen Außenoberfläche 14 und Krümmungsabschnitt 19 angeordnet oder ausgebildet ist. Der Stufenabschnitt 21 ermöglicht einerseits, dass im oberen Bereich des Formkragens 8, in der Nähe oder angrenzend an die Außenoberfläche 14 in radialer Richtung R eine ausreichende Stärke des Formkragens 8 vorhanden ist, um das Sicherungsgewinde 22 zu tragen. Gleichzeitig ermöglicht der Stufenabschnitt 21 jedoch auch, dass in einem mittleren und unteren Bereich des Formkragens 8, bevorzugt im Bereich des Krümmungsabschnitts 19 und des Hinterschneidungsabschnitts 17 der Formkragen 8 eine im Wesentlichen gleichbleibende und bevorzugt verhältnismäßig geringe Stärke aufweist, was den Federeigenschaften des Formkragens 8 zugutekommt. Der Stufenabschnitt 21 kann sowohl durch eine Kaltumformung oder Kaltverformung als auch durch eine spanende Bearbeitung ausgebildet werden. In der Fig. 2 ist neben dem Sicherungsgewinde oder Sicherungsinnengewinde 22 auch das Innengewinde 23 der Innengewindebohrung 9 dargestellt. Die Gewinde 23 und 22 sind so gegeneinander versetzt, insbesondere um einen Winkel gegeneinander verdreht oder rotiert, dass beim Einschrauben eines Gewindebolzens in die Sicherungsmutter 20 eine elastische Verformung des Formkragens 8 herbeigeführt wird, sodass eine Verspannung zwischen Mutterkörper 1 und Formkragen 8 zu einer Sicherung oder Selbstsicherung des Schraubbolzens führt.

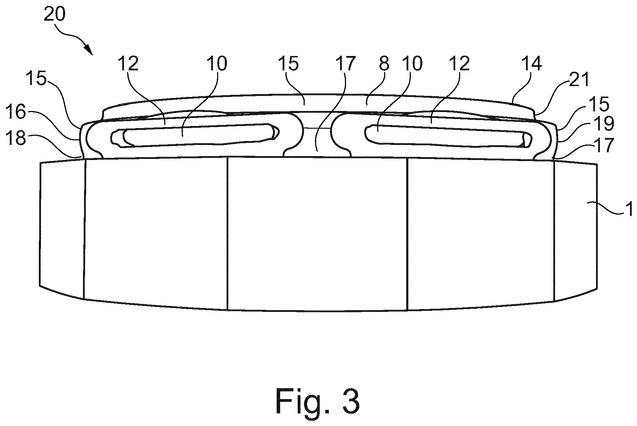

Die Fig. 3 zeigt eine Seitenansicht auf eine erfindungsgemäße Sicherungsmutter 20. In der Fig. 3 ist zu erkennen, dass der Formkragen 8 neben einem Stufenabschnitt 21 in Umfangsrichtung abwechselnd erste Abschnitte 15 mit einem Hinterschneidungsabschnitt 17 und einem Krümmungsabschnitt 19 und zweite Abschnitte 12 mit einer reduzierten Wandstärke des Formkragens 8 aufweist. Die zweiten Abschnitte 12 des Formkragens 8 mit reduzierter Wandstärke weisen dabei eine derart reduzierte Wandstärke auf, dass zentral oder innenliegend in den Abschnitten 12 mit reduzierter Wandstärke die Reduzierung der Wandstärke derart stark ausfällt, dass Schlitze 10 im Formkragen 8 geformt oder ausgebildet werden, die sich von der radialen Außenseite 16 bis in den radial inneren Spalt zwischen Innengewindebohrung 9 und Innenstirnfläche 11 erstrecken. Die Abschnitte 12 des Formkragens 8 mit reduzierter Wandstärke ermöglichen eine Einstellung oder Veränderung der Federwirkung des Formkragens 8 und haben somit auch Einfluss auf die Erzeugung des Bremsmoments auf einen Schraubbolzen. Auch die Bereiche 15, die den Hinterschneidungsabschnitt 17 und den Krümmungsabschnitt 19 aufweisen, tragen zu der vorteilhaften Federwirkung des Formkragens 8 bei und stabilisieren zudem die Verbindung zwischen Mutterkörper 1 und Formkragen 8.

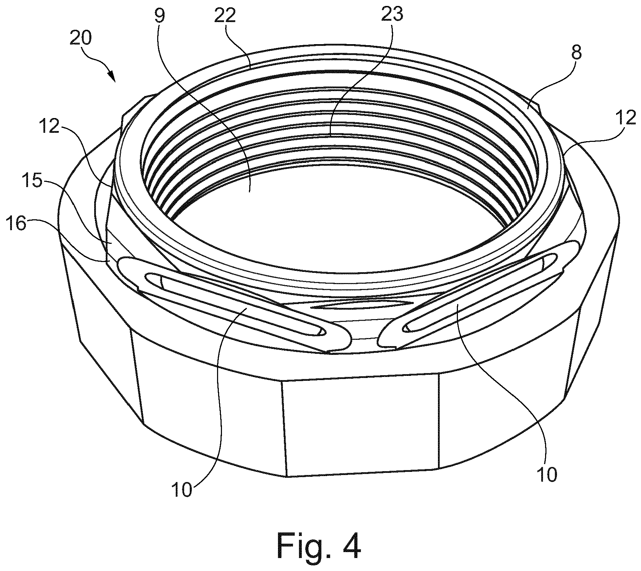

In der perspektivischen Darstellung der Fig. 4 ist zu erkennen, dass in den Abschnitte 12 mit reduzierter Wandstärke in den Außen- oder Randbereichen noch ein Teil des Krümmungsabschnitts 19 sowie des Hinterschneidungsabschnitts 17 verbleibt. In den mittleren Bereichen, insbesondere in den Bereichen, in denen die Schlitze 10 ausgebildet sind, ist hingegen kein Krümmungsabschnitt 19 und auch kein Hinterschneidungsabschnitt 17 mehr ausgebildet. In der Fig. 4 sind ebenfalls die Innengewinde 23 und 22 zu erkennen. Weiterhin ist erkennbar, dass die Abschnitte 12 mit reduzierter Wandstärke auf beiden Seiten der Innengewindebohrung 9 ausgebildet sind und gegenüberliegende Abschnitte 12 mit reduzierter Wandstärke parallel zueinander verlaufen. Gleichermaßen ist anhand der Fig. 4 zu erkennen, dass die radiale Außenseite 16 des Formkragens 8 in Abschnitten 12 mit reduzierter Wandstärke eben und in axialer Richtung A verlaufen. Dies erlaubt beispielsweise, dass die Bereiche 12 mit reduzierter Wandstärke durch nachträglichen Materialabtrag des Formkragens 8, wie beispielsweise in der Fig. 2 dargestellt, ausgebildet werden.

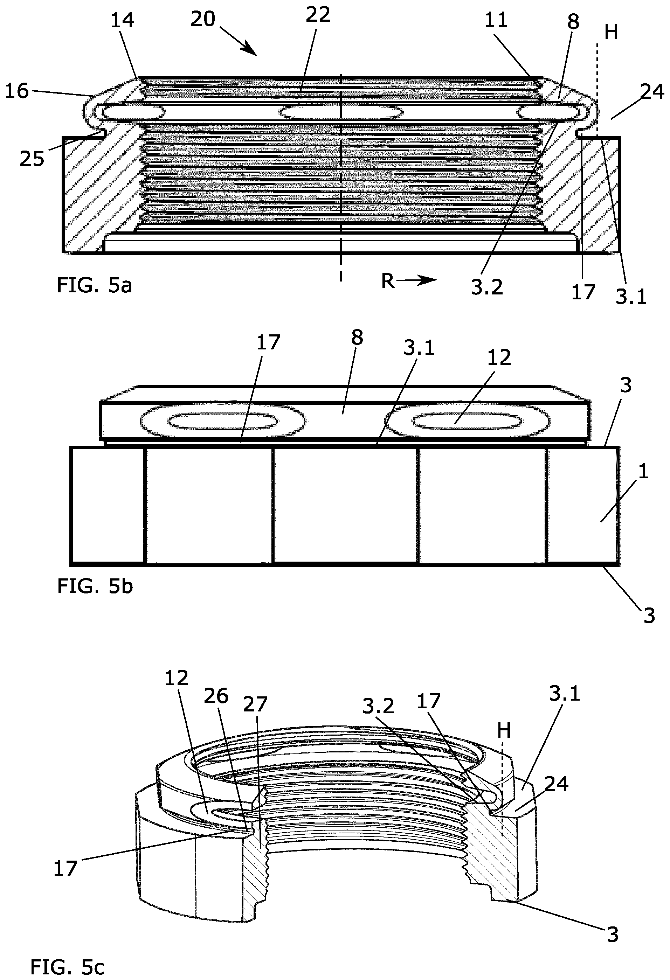

Die Darstellung der Fig. 5a zeigt eine weitere Ausführungsform einer erfindungsgemäßen Sicherungsmutter 20. Die Ausführungsform hat Ähnlichkeiten oder Überschneidungen mit der Ausführungsform der Figuren 3 und 4. Wie der Fig. 5a entnommen werden kann, weist die Sicherungsmutter 20 der Fig. 5a im Gegensatz zu der Ausführungsform der Figuren 3 und 4 keinen Stufenabschnitt 21 auf. Stattdessen ist der Formkragen 8 so ausgebildet, dass die Stärke oder Breite des Formkragens 8 mit zunehmender Annäherung an die Außenoberfläche 14 und mit zunehmender Annäherung an das Sicherungsgewinde 22 zunehmend ist, ohne jedoch eine entsprechende Stufe oder einen Stufenabschnitt 21 auszubilden. Die kontinuierliche Zunahme der Stärke des Formkragens nach radial innen auf das Sicherungsgewinde 22 zu hat den Vorteil, dass auf der Innenstirnfläche 11 genügend Material oder eine genügende Materialstärke in axialer Richtung ausgebildet ist, um ein Sicherungsgewinde 22 mit ausreichend vielen Windungen oder mit einem ausreichend großen Windungsabschnitt bereitzustellen. Dabei kann auf die verhältnismäßig aufwendige Ausbildung des Stufenabschnitts verzichtet werden. Gegebenenfalls ist sogar möglich die mit zunehmendem axialen Abstand nach radial innen größer werdende Wandstärke des Formkragens ohne spanende Bearbeitung des Formkragens lediglich durch Umformen eines Ringkragens mit einer entsprechend zunehmenden Wandstärke in axialer Richtung auszubilden.

Anhand der Darstellung der Fig. 5a soll auch nochmals die Begrifflichkeit und die technische Bedeutung des Hinterschneidungsabschnitts 17 erläutert werden.

Die Stirnfläche 3 ist im Ausführungsbeispiel der Fig. 5a im Wesentlichen waagrecht oder in radialer Richtung eben und parallel zur radialen Richtung ausgebildet. Die Stirnfläche 3 weist von dem Mutterkörper 1 weg. In axialer Richtung A angrenzend an die Stirnfläche 3 und mit zunehmendem Abstand vom Mutterkörper 1 schließen sich in radialer Richtung zwei unterschiedliche Bereiche an, die in der Darstellung der Fig. 5a durch eine Hilfslinie H voneinander getrennt sind. Insbesondere betrifft dies einen radial äußeren Teil 3.1 der Stirnfläche 3. In einem radial inneren Bereich befindet sich der Hinterschneidungsabschnitt 17, der bezüglich auf die Hilfslinie H radial innenliegend ausgebildet ist. Auf der radial außenliegenden Seite der Hilfslinie H schließt sich in axialer Richtung A an die Stirnfläche 3 mit zunehgmenden Abstand von dem Mutterkörper ein Überstandsabschnitt 24 an. Wie der Fig. 5a entnommen werden kann, verläuft die Hilfslinie H parallel zur axialen Richtung A durch den radial am weitesten außenliegenden Punkt der radialen Außenseite 16 des Formkragens 8.

Der Formulierung, wonach in axialer Richtung A angrenzend an die Stirnfläche 3 auf einer radialen Außenseite 16 des Formkragens 8 durch den Formkragen ein Hinterschneidungsabschnitt 17 ausgebildet wird, soll dementsprechend Ausgestaltungen umfassen, bei denen die radial äußere Stirnfläche 3.1 existiert, da sonst bereits keine Stirnfläche zur Verfügung steht, von der ausgehend in axialer Richtung die radial äußere Seite oder die radiale Außenseite des Formkragens überhaupt einen Hinterschneidungsabschnitt 17 ausbilden kann. Darüber hinaus ist die obige Formulierung gerade so zu verstehen, dass der Hinterschneidungsabschnitt 17 gerade der Abschnitt oder Bereich im radial inneren Bereich der Hilfslinie H ist. Mit anderen Worten ausgedrückt bedeutet dies, dass der Hinterschneidungsabschnitt 17 in der Darstellung der Fig. 5a durch einen Teil der radial äußeren Stirnfläche 3.1, den Formkragen 8 und die Hilfslinie H begrenzt wird.

In der Fig. 5a ist zudem eine vorteilhafte Ausführungsform vorgesehen, in der im Hinterschneidungsabschnitt 17 einen in axialer Richtung an die Stirnfläche 3 angrenzenden Basisabschnitt 25 aufweist, der über eine gewisse Länge in axialer Richtung achsparallel zur axialen Richtung A verläuft. Ein Hinterschneidungsabschnitt mit einem derart geradlinig verlaufenden Basisabschnitt 25 des in radialer Richtung R am weitesten innenliegenden Bereich, erlaubt in besonders vorteilhafter Weise eine nachträgliche, insbesondere spanende, Herstellung oder Nachbearbeitung des Hinterschneidungsabschnitts 17.

In der Seitenansicht der Fig. 5b wird nochmals deutlich, was die vorliegende Offenbarung als Stirnseite 3 verstanden haben möchte. Es existieren bezogen auf den Mutterkörper 1 zwei Stirnseiten 3 an gegenüberliegenden Enden des Mutterkörpers 1 in axialer Richtung A. Die dem Formkragen zugewandte Stirnseite 3, die auf einem radial äußeren Abschnitt, nämlich der Stirnseite 3.1, die Begrenzung des Hinterschneidungsabschnitts 17 mitbewirkt, hat auf einer radial innenliegenden Seite des Mutterkörpers 1, wie in der Schnittdarstellung der Fig. 5a erkennbar, einen weiteren Abschnitt 3.2, der in axialer Richtung weiter oben oder näher am Formkragen 8 angeordnet ist, als die in radialer Richtung R außenliegende Stirnfläche 3.1.

In der Fig. 5b sind weiterhin die Abschnitte 12 des Formkragens 8 mit reduzierter Wandstärke erkennbar, wobei in der Darstellung der Fig. 5b im Vergleich zur Darstellung der Figuren 3 und 4 erkennbar ist, dass auch in den Abschnitten 12 mit reduzierter Wandstärke in axialer Richtung zwischen der Stirnfläche 3.1 und dem Formkragen 8 ein Hinterschneidungsabschnitt 17 verbleibt.

Dieser Resthinterschnitt 26 ist beispielsweise auch der Fig. 5c im Bereich der linken Schnittfläche 27 unterhalb eines Abschnitts 12 mit reduzierter Wandstärke zu entnehmen. In der Ausführungsform der Figuren 5a bis 5c ist der Hinterschneidungsabschnitt 17 oder zumindest der Resthinterschnitt 26 des Hinterschneidungsabschnitts 17 folglich radial umlaufend und ununterbrochen ausgebildet. Diese Ausführungsform, insbesondere in Verbindung mit der in radialer Richtung R eben und parallel zur Radialrichtung verlaufenden Stirnflächen 3, 3,1, erlaubt in besonders vorteilhafter Weise eine einfache spanende Herstellung oder Nachbearbeitung des Hinterschneidungsabschnitts 17.

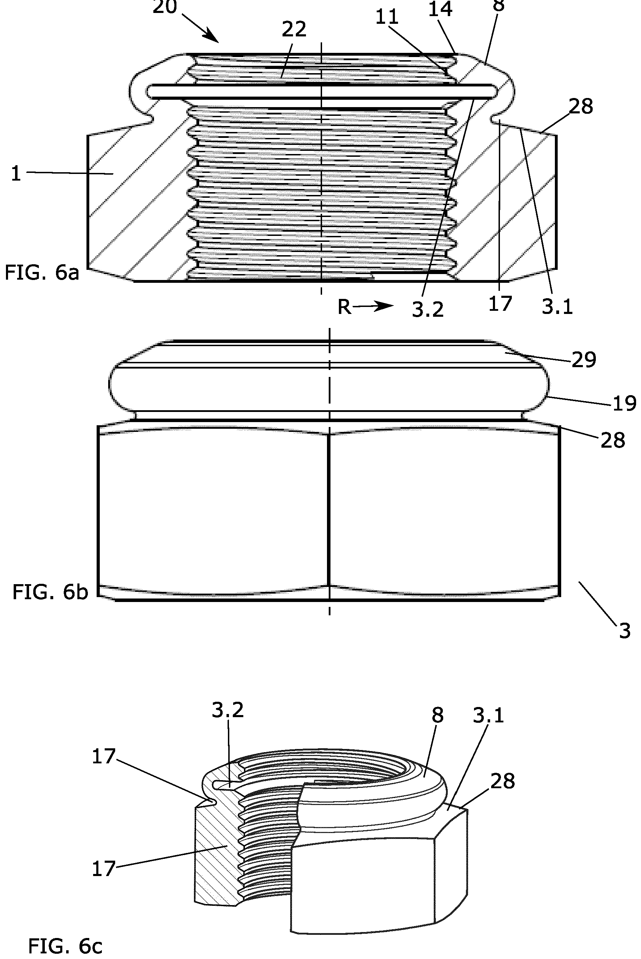

Die Figuren 6a bis 6c haben mit der Ausführungsform der Figuren 5a bis 5c gemein, dass ebenfalls kein Stufenabschnitt 21 ausgebildet ist, sondern der Formkragen 8 mit axialem Abstand von der Stirnfläche 3 und mit zunehmender Nähe zur Innenstirnfläche 11 zur Ausbildung des Sicherungsgewindes 22 kontinuierlich zunimmt, um in axialer Richtung A eine genügend breite oder hohe Fläche zur Ausbildung des Sicherungsgewindes 22 bereitstellen zu können. Im Unterschied zur Ausführungsform der Figuren 5a bis 5c weist die Sicherungsmutter 20 der Ausführungsform der Figuren 6a bis 6c keine Abschnitte im Formkragen mit reduzierter Wandstärke auf. Weiterhin ist die radial äußere Stirnfläche 3.1 zwar eben ausgebildet, verläuft aber nicht parallel zur radialen Richtung R sondern nach radial außen hin abfallend in der Form einer Schulter 28.

Die radial innere Abschnitt 3.2 der Stirnfläche 3 verläuft hingegen abermals höherliegend als die Stirnfläche 3.1, parallel zur Radialrichtung R.

Auch der in radialer Richtung R am weitesten innenliegende Abschnitt des Hinterschneidungsabschnitts 17 verläuft in der Ausführungsform der Figuren 6a bis 6c, wie dargestellt, über keinen nennenswerten Bereich parallel zur axialen Richtung A, sondern vielmehr ausgehend von der geneigten Schulter 28 durchgängig gekrümmt.

Ausgehend von der geneigten Schulter 28 kann in dieser Ausführungsform der Hinterschneidungsabschnitt 17 ebenfalls besonders leicht und effektiv ausgebildet werden.

Wie auch bei der Ausführungsform der Figuren 5a bis 5c ist die Außenoberfläche 14 verhältnismäßig klein oder als verhältnismäßig dünne Ringscheibe ausgebildet und geht direkt in einen oberen Schulterabschnitt 29 des Formkragens 8 über, der gegenüber der radialen Richtung R nach radial außen geneigt verläuft, der dann wiederum in einen Krümmungsabschnitt 19 übergeht, so dass im Inneren des Formkragens 8 insbesondere durch den oberen Schulterabschnitt 29 die zunehmende Stärke oder zunehmende Höhe des Formkragens 8 mit zunehmender Annäherung an die Innenstirnfläche 11 ausgebildet wird.

Wie bereits vorangehend ausgeführt, hat diese Ausführungsform der radialen Außenseite des Formkragens insbesondere fertigungstechnische Vorteile. Außerdem kann dadurch die Federeigenschaft des Formkragens positiv beeinflusst werden.

### Bezugszeichen

- 1: Mutterkörper
- 3: Stirnfläche
- 8: Formkragen
- 9: Innengewindebohrung
- 10: Schlitz
- 11: Innenstirnfläche
- 12: zweite Abschnitte
- 13: Innenoberfläche
- 14: Außenoberfläche
- 15: erste Abschnitte
- 16: Außenseite
- 17: Hinterschneidungsabschnitt
- 19: Krümmungsabschnitt
- 20: Sicherungsmutter
- 21: Stufenabschnitt
- 22: Sicherungsgewinde
- 23: Innengewinde
- 24: Überstandsabschnitt
- 25: Basisabschnitt
- 26: Resthinterschnitt
- 27: Schnittfläche
- 28: Schulter
- 29: Schulterabschnitt

- A: axiale Richtung
- R: radiale Richtung
- H: Hilfslinie

## Patentansprüche

1. Sicherungsmutter (20) mit einem an einer Stirnfläche (3) eines Mutterkörpers (1) angeordneten, einstückig mit dem Mutterkörper (1) verbundenen Formkragen (8) mit einer konzentrisch zu einer Innengewindebohrung (9) des Mutterkörpers (1) verlaufenden Innenstirnfläche (11), welche in axialer Richtung (A) eine Beabstandung von der Innengewindebohrung (9) aufweist und ein Sicherungs-Innengewinde (22) aufweist, welches zu einem Innengewinde (23) der Innengewindebohrung (9) versetzt ist, wobei in axialer Richtung (A) angrenzend an die Stirnfläche (3) auf einer radialen Außenseite (16) des Formkragens (8) durch den Formkragen (8) ein Hinterschneidungsabschnitt (17) ausgebildet wird, wobei der Formkragen (8) auf einer radialen Außenseite (16), bevorzugt angrenzend an eine Außenoberfläche (14), einen Krümmungsabschnitt (19) ausbildet, der eine kreisrunde oder elliptische Kontur aufweist,
**dadurch gekennzeichnet,**
**dass** in Umfangsrichtung der Hinterschneidungsabschnitt (17) und/oder Krümmungsabschnitt (19) abschnittsweise ausgebildet ist.

2. Sicherungsmutter nach Anspruch 1,
**dadurch gekennzeichnet,**
**dass** der Formkragen (8) auf einer radialen Außenseite (16), bevorzugt angrenzend an eine Außenoberfläche (14) und/oder einen Krümmungsabschnitt (19), einen Stufenabschnitt (21) ausbildet, der bevorzugt in axialer Richtung (A) auf die Außenoberfläche (14) zu immer stärker in axialer Richtung verläuft.

3. Sicherungsmutter nach Anspruch 2,
**dadurch gekennzeichnet,**
**dass** in Umfangsrichtung Abschnitte (15) mit Hinterschneidungsabschnitt (17) und/oder Krümmungsabschnitt (19) mit Abschnitten (12) des Formkragens (8) mit reduzierter Wandstärke abwechselnd angeordnet sind.

4. Sicherungsmutter nach Anspruch 3,
**dadurch gekennzeichnet,**
**dass** die Abschnitte (12) des Formkragens (8) mit reduzierter Wandstärke Schlitze (10) im Formkragen (8) umschließen, die parallel zur Stirnfläche (3) verlaufen.

5. Sicherungsmutter nach Anspruch 3 oder 4,
**dadurch gekennzeichnet,**
**dass** die Abschnitte (12) des Formkragens (8) mit reduzierter Wandstärke auf der radialen Außenseite (16) des Formkragens (8) eben und in axialer Richtung (A) verlaufen.

6. Sicherungsmutter nach einem der Ansprüche 3 bis 5,
**dadurch gekennzeichnet,**
**dass** Abschnitte (12) des Formkragens (8) mit reduzierter Wandstärke auf der radialen Außenseite (16) des Formkragens (8) über den Umfang gleichverteilt angeordnet sind.

7. Sicherungsmutter nach einem der Ansprüche 1 bis 6,
**dadurch gekennzeichnet,**
**dass** der Formkragen (8) durch eine Umformung eines Ringkragens ausgebildet ist.

8. Sicherungsmutter nach einem der Ansprüche 1 bis 7,
**dadurch gekennzeichnet,**
**dass** der Formkragen (8) durch eine spanende Bearbeitung ausgebildet ist.

9. Sicherungsmutter nach einem der Ansprüche 1 bis 8,
**dadurch gekennzeichnet,**
**dass** der Formkragen (8), zumindest angrenzend an die Innenstirnfläche (11), eine über den gesamten Umfang ebene, insbesondere vertiefungsfreie, Außen- und/oder Innenoberfläche (13, 14) aufweist.

## Claims

1. A securing nut (20) comprising a shaped collar (8) disposed on an end surface (3) of a nut body (1) and integrally connected to the nut body (1), the shaped collar (8) having an inner end surface (11) concentric with an internally threaded hole (9) of the nut body (1), the inner end surface (11) having a distance from the internally threaded hole (9) in an axial direction (A) and having a securing female thread (22) offset from a female thread (23) of the internally threaded hole (9), the shaped collar (8) forming an undercut portion (17) adjacent to the end surface (3) in the axial direction (A) on a radial outer side (16) of the shaped collar (8), the shaped collar (8) forming a curved portion (19) on a radial outer side (16), preferably adjacent to an outer surface (14), the curved portion (19) having a circular or elliptical contour,
**characterized in that**
the undercut portion (17) and/or the curved portion (19) is formed in sections in a circumferential direction.

2. The securing nut according to claim 1,
**characterized in that**
the shaped collar (8) forms a stepped portion (21) on a radial outer side (16), preferably adjacent to an outer surface (14) and/or a curved portion (19), the stepped portion (21) extending increasingly in the axial direction as it approaches the outer surface (14) preferably in the axial direction (A).

3. The securing nut according to claim 2,
**characterized in that**
in the circumferential direction, portions (15) having the undercut portion (17) and/or the curved portion (19) alternate with portions (12) of the shaped collar (8) that have a reduced wall thickness.

4. The securing nut according to claim 3,
**characterized in that**
the portions (12) of the shaped collar (8) that have a reduced wall thickness enclose slots (10) in the shaped collar (8), the slots (10) running parallel to the end surface (3).

5. The securing nut according to claim 3 or 4,
**characterized in that**
the portions (12) of the shaped collar (8) that have a reduced wall thickness are plane and run in the axial direction (A) on the radial outer side (16) of the shaped collar (8).

6. The securing nut according to any one of claims 3 to 5,
**characterized in that**
portions (12) of the shaped collar (8) that have a reduced wall thickness are distributed evenly across the circumference on the radial outer side (16) of the shaped collar (8).

7. The securing nut according to any one of claims 1 to 6,
**characterized in that**
the shaped collar (8) is formed by reshaping a ring collar.

8. The securing nut according to any one of claims 1 to 7,
**characterized in that**
the shaped collar (8) is formed by machining.

9. The securing nut according to any one of claims 1 to 8,
**characterized in that**
the shaped collar (8) has an outer and/or inner surface (13, 14) which is plane, in particular free from recesses, across the entire circumference at least adjacent to the inner end surface (11).

## Revendications

1. Écrou de blocage (20) comprenant une collerette façonnée (8) disposée sur une face frontale (3) d'un corps d'écrou (1) et liée intégralement au corps d'écrou (1), la collerette façonnée (8) ayant une face frontale intérieure (11) concentrique avec un trou à filetage intérieur (9) du corps d'écrou (1), la face frontale intérieure (11) ayant une distance du trou à filetage intérieur (9) dans une direction axiale (A) et ayant un filetage intérieur de blocage (22) décalé d'un filetage intérieur (23) du trou à filetage intérieur (9), la collerette façonnée (8) formant une partie contre-dépouillée (17) sur un côté extérieur radial (16) de la collerette façonnée (8) au voisinage de la face frontale (3) dans la direction axiale (A), la collerette façonnée (8) formant une partie courbée (19) sur un côté extérieur radial (16), de préférence au voisinage d'une surface extérieure (14), la partie courbée (19) ayant un contour circulaire ou elliptique,
**caractérisé en ce que**
la partie contre-dépouillée (17) et/ou la partie courbée (19) est formée en sections dans une direction circonférentielle.

2. Écrou de blocage selon la revendication 1,
**caractérisé en ce que**
la collerette façonnée (8) forme une partie de gradin (21) sur un côté extérieur radial (16), de préférence au voisinage d'une surface extérieure (14) et/ou une partie courbée (19), la partie de gradin (21) s'étendant de plus en plus dans la direction axiale lorsqu'elle s'approche de la surface extérieure (14), de préférence dans la direction axiale (A).

3. Écrou de blocage selon la revendication 2,
**caractérisé en ce que**
dans la direction circonférentielle, des parties (15) ayant la partie contre-dépouillée (17) et/ou la partie courbée (19) alternent avec des parties (12) de la collerette façonnée (8) qui ont une épaisseur de paroi réduite.

4. Écrou de blocage selon la revendication 3,
**caractérisé en ce que**
les parties (12) de la collerette façonnée (8) qui ont une épaisseur de paroi réduite enclavent des fentes (10) dans la collerette façonnée (8), les fentes (10) s'étendant parallèlement à la face frontale (3).

5. Écrou de blocage selon la revendication 3 ou 4,
**caractérisé en ce que**
les parties (12) de la collerette façonnée (8) qui ont une épaisseur de paroi réduite sont planes et s'étendent dans la direction axiale (A) sur le côté extérieur radial (16) de la collerette façonnée (8).

6. Écrou de blocage selon l'une quelconque des revendications 3 à 5,
**caractérisé en ce que**
des parties (12) de la collerette façonnée (8) qui ont une épaisseur de paroi réduite sont réparties uniformément sur la circonférence sur le côté extérieur radial (16) de la collerette façonnée (8).

7. Écrou de blocage selon l'une quelconque des revendications 1 à 6,
**caractérisé en ce que**
la collerette façonnée (8) est formée par façonnage d'une collerette annulaire.

8. Écrou de blocage selon l'une quelconque des revendications 1 à 7,
**caractérisé en ce que**
la collerette façonnée (8) est formée par usinage.

9. Écrou de blocage selon l'une quelconque des revendications 1 à 8,
**caractérisé en ce que**
la collerette façonnée (8) a un surface extérieure et/ou intérieure (13, 14) qui est plane, notamment sans creux, sur la circonférence entière, au moins au voisinage de la face frontale intérieure (11).
